# EUROPEAN PATENT APPLICATION

(11) **EP 4 310 681 A1**
(43) Date of publication of application: **24.01.2024**
(21) Application number: 22306068.2
(22) Date of filing: 18.07.2022
(51) Int. Cl.: G06F 9/54, G06F 11/30

(54) **EVENT FILTERING AND CLASSIFICATION USING COMPOSITE EVENTS**

(71) Applicant: NXP B.V., 5656 AG Eindhoven (NL)
(72) Inventor: Barrilado Gonzalez, Andres, 31023 Toulouse Cedex 1 (FR); Galtie, Franck, 31023 Toulouse Cedex 1 (FR); Schlagenhaft, Rolf Dieter, 5656 AG Eindhoven (NL); Nautiyal, Hemant, 5656 AG Eindhoven (NL)
(74) Representative: Schmütz, Christian Klaus Johannes

(57) **Abstract**

An event manager for filtering safety and security events of a system including an event sequence list including predetermined event sequences in which each sequence includes at least one event identifier identifying a corresponding one of multiple monitored events, an event sequence array that stores a received event sequence in response to received event notifications, and a controller that stores an event identifier into the event sequence array and that determines whether the received event sequence matches at least one of the predetermined event sequences for determining a composite event and a response for each received event notification. The matching determination may be made with or without consideration of chronological order. A suspected composite event may be identified when multiple possible matches may exist, and a final composite event is ratified when only one match is found. An exception may be generated upon timeout of a timer.

## Description

### FIELD OF THE INVENTION

The present disclosure relates in general to event monitoring for safety and security, and more specifically to an event manager that performs event filtering and classification using composite events for determining appropriate response.

### DESCRIPTION OF THE RELATED ART

Various mechanisms or circuitry of a system may be monitored for various purposes, such as safety, security, fault detection, error detection, etc., or any suitable combination thereof. Each monitoring apparatus may generate a corresponding event notification identifying occurrence of an event in the form of a flag, a message, a bit, a signal, etc. The types of events may depend upon the system being monitored, such as a computer or other type of processing system, an electronic control unit for an automobile or other type of vehicle, a security monitoring system for a physical or virtual location, etc. Each event notification is typically an asynchronous notification of an unexpected or unwanted occurrence, such as an over-voltage (OV) condition, an under-voltage (UV) condition, an unexpected bit flip, an incorrect mathematical or computational result, a cyber-attack, a hack event, a system failure (e.g., automobile brake or steering failure), etc. Conventional event managers are typically configured to provide a corresponding response to each individual event as though unrelated or independent, which often results in multiple reactions being triggered on a single source. The multiple independent reactions may not, however, provide an optimal response.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a system including an event manager implemented according to one embodiment of the present disclosure.
FIG. 2 is a simplified block diagram of the event filter of FIG. 1 implemented according one embodiment of the present disclosure.
FIG. 3 is a simplified tabular diagram of an exemplary ESL which may be used as the ESL of FIG. 2 according to one embodiment of the present disclosure in which the chronological order of the events is not considered.
FIG. 4 is a simplified tabular diagram of an exemplary ESL which may instead be used as the ESL of FIG. 2 according to another embodiment of the present disclosure in which the chronological order of the events is considered.
FIG. 5 is an exemplary diagram illustrating operation of the event manager of FIG. 1 using the ESL of FIG. 3 according to one embodiment of the present disclosure triggered by an event notification received via the event bus.
FIG. 6 is an exemplary diagram illustrating operation of the event manager of FIG. 1 according to one embodiment of the present disclosure triggered by assertion of TO by the timer of FIG. 2.
FIG. 7 is a time chart illustrating operation of the event manager of FIG. 1 following flowchart diagrams of FIGs 5 and 6 using the ESL of FIG. 3 according to one embodiment.
FIG. 8 is another exemplary flowchart diagram illustrating operation of the event manager of FIG. 1 using the ESL of FIG. 4 according to another embodiment of the present disclosure triggered by an event notification received via the event bus.
FIG. 9 is a process chart illustrating memory error detection by the event manager of FIG. 1 performing event filtering and classification using composite events implemented according to an embodiment of the present disclosure.
FIG. 10 is a process chart illustrating system-on-chip (SoC) error detection by the event manager of FIG. 1 performing event filtering and classification using composite events implemented according to an embodiment of the present disclosure.
FIG. 11 is a process chart illustrating automotive radar processing error detection by the event manager of FIG. 1 performing event filtering and classification using composite events implemented according to an embodiment of the present disclosure.

### DETAILED DESCRIPTION

Event notifications generated by safety mechanisms or security intrusion alarms or the like are provide to an event manager, which performs filtering to avoid responses or reactions which are unwanted or which are not necessary to maintain safety and security (false alarms) of the system. The event manager may cluster several events into a single "composite event" which may be used to determine the optimal response. Event filtering and classification using event sequences or composite events as described herein addresses the problem of independently reacting to single events when indeed those events may be inter-related and may thus form a cascaded set of events. A system and method as described herein resolves the disadvantage of multiple independent reactions being triggered from one or more single sources.

An event manager as described herein filters different incoming events based on patterns which may or may not be chronological. The event manager is not limited by a minimum number of events (a sequence can be just one event) or a maximum number of events (theoretically). An event manager as described herein identifies cascaded effects in safety-related systems, is able to prepare early identification of sequences before being confirmed (or ratified), is able to stop identification without a specific final signature, and includes a time-out mechanism with respect to Fault Reaction Time Interval (FRTI) constraints.

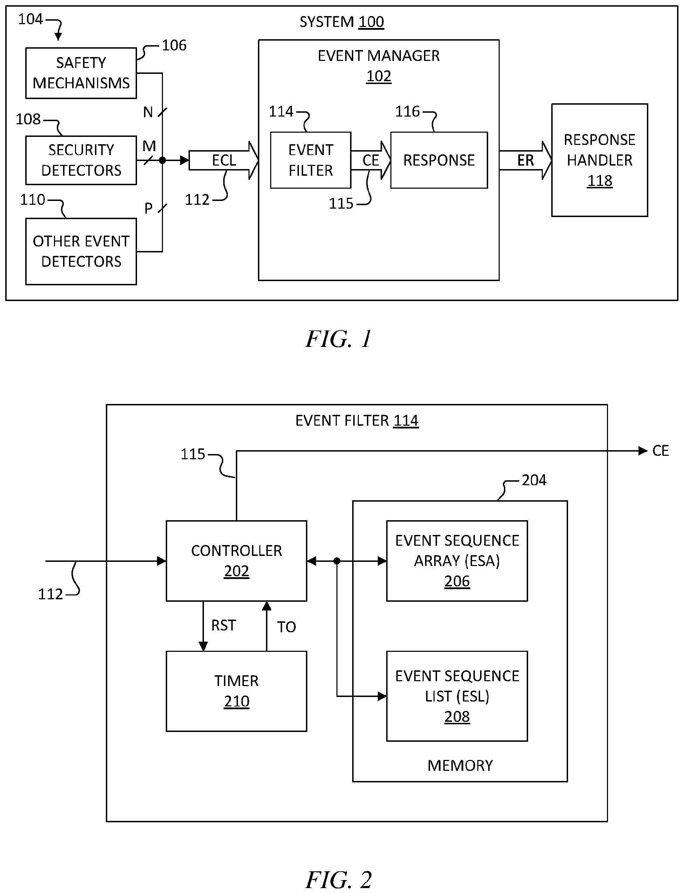

FIG. 1 is a simplified block diagram of a system 100 including an event manager 102 implemented according to one embodiment of the present disclosure. The system 100 may include any number of system monitors 104 which may include any number (e.g., N) of safety mechanisms 106, any number (e.g., M) of security detectors 108, and any number (e.g., P) of other event detectors 110, in which N, M, and P are each integers of 0 or greater. Thus, the system monitors 104 may include only safety mechanisms 106, only security detectors 108, or only other types of event detectors 110, or any suitable combination thereof. Each system monitor 104 generates an event notification provided on an event communication link (ECL) 112 to the event manager 102. The ECL 112 may be implemented in any suitable manner, such as a bus, a serial link, a parallel link, etc.

The types of events that are monitored may depend upon the type of system 100, in which the system 100 may be a computer or other type of processing system, an automobile or other type of vehicle, a physical or virtual location, a cyber physical system, etc. Each event notification is typically an asynchronous notification of an unexpected or unwanted occurrence, such as an over-voltage (OV) condition or an under-voltage (UV) condition, an unexpected bit flip, an incorrect mathematical or computational result, a cyber-attack, a hack event, a system failure (e.g., automobile brake or steering failure), etc. The event notifications provided on the ECL 112 may be of any form, such as flags, messages, bits, signals, etc.

It is noted that a single event notification alone does not necessarily require a system response yet to maintain safe and secure operation of the system. A single event may still have no impact on safe and secure system operation by masking effects or by having a marginal impact only. A single event, however, can be the root cause for a series of further events and ultimately to dangerous or unsecure system behavior, justifying that the event manager 102 takes notice of a first event. The event manager 102 includes an event filter 114 that receives the event notifications and that determines a corresponding ratified composite event (CE) 115, and response block 116 that generates an event response (ER) based on the CE 115. The event response ER may be provided to a response handler 118 of the system 100 that takes appropriate actions ultimately based on the detected CE 115.

FIG. 2 is a simplified block diagram of the event filter 114 implemented according one embodiment of the present disclosure. The event filter 114 may include a controller 202 coupled to the ECL 112 for receiving the event notifications from the system monitors 104. The controller 202 may be configured with a processor or processing circuitry (not shown) for independent operation or may operate in cooperation with a processor or processing circuitry of the event manager 102 or the system 100. The processor or processing circuitry may be of any type, such as a state machine implemented in hardware or software, a microprocessor, central processing unit (CPU), microcontroller, or the like. The event filter 114 may include a memory 204 for storing an event sequence array (ESA) 206 for storing a received event sequence, and for storing an event sequence list (ESL) 208 for storing a list of predetermined event sequences and corresponding information described further herein. The event filter 114 may further include a timer 210 that is started or restarted via RST signal from the controller 202, and which generates a timeout (TO) signal back to the controller 202 upon expiration of a predetermined or programmed time duration. The timer 210 may be configured in any suitable manner, such as a counter or the like.

Operation of the event filter 114 is now briefly described. The ESL 208 stores a list of predetermined event sequences and a corresponding composite event identifier (CEID) for each predetermined event sequence. A composite event is a predetermined event sequence including one or more events as a composition of events either regardless of order received (e.g., a set of events in any order received), or received in chronological order. For those embodiments in which chronological order is considered, each composite event in the list may further include a separate timeout (TO) duration. For each event notification received from the system monitors 104, the controller 202 enters a corresponding event identifier into the ESA 206, and then the controller 202 compares the updated current event sequence with each of the predetermined event sequences stored in the ESL 208. The controller 202 also starts or restarts the timer 210 for each event notification received using either a default duration or one retrieved from the ESL 208. If the events in the ESA 206 match a predetermined event sequence in the ESL 208, then the event filter 114 ratifies and outputs the corresponding composite event CE 115 to the response block 116. If a predetermined event sequence is not identified upon TO of the timer 210, then the controller 202 generates an exception. An exception may be communicated in any suitable manner, such as in interrupt, an exception format of the CE 115, or by any other communication means to inform a processor or the like of the system 100.

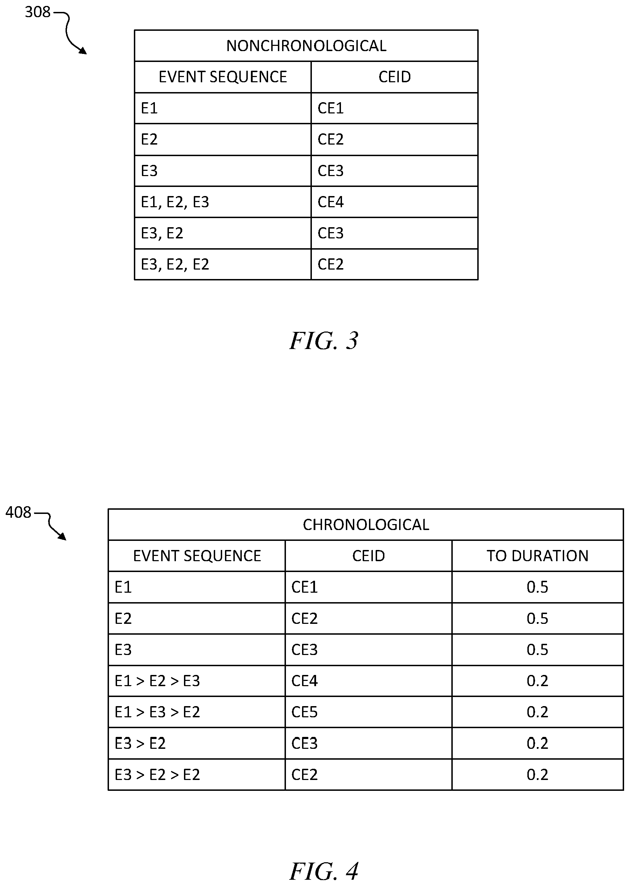

FIG. 3 is a simplified tabular diagram of an exemplary ESL 308 which may be used as the ESL 208 according to one embodiment of the present disclosure in which the chronological order of the events is not considered (or "nonchronological"). Events are designated by event identifiers in the form of "E" values followed by a numeric designator to uniquely identify each of the events being monitored by the system monitors 104. The ESL 308 includes an event sequence column denoting a list of one or more events that may be identified by corresponding event notifications received via the ECL 112. The listed event sequences are predetermined and thus include expected event scenarios that may be received. A corresponding composite event identifier (CEID) is provided for each predetermined event sequence. The ESL 308 is simplified in that only 3 events are included E1, E2, and E3, where it is understood that the number of events may be less (e.g., only 2 events) or greater than 3 events, such as tens or hundreds or even thousands of events or more. The ESL 308 is also simplified in that all possible permutations of the 3 events E1 - E3 are not included in the list of event sequences so that the illustrated ESL 308 is not exhaustive, but instead is provided for purposes of illustration. In addition, chronological order of the events received for the ESL 308 is not considered so that the listed events may be received in any order.

The event sequences listed in the ESL 308 include individual event identifiers E1, E2, and E3 with corresponding CEIDs CE1, CE2, and CE3, respectively. The next event sequence entry includes each of the event identifiers E1, E2, and E3 with corresponding CEID CE4, in which the events may be received in any order since chronological order is not considered. When chronological order is not considered, the events in the event sequences are shown separated by commas. The next event sequence entry includes the event identifiers E3 and E2 with corresponding CEID CE3, which is the same CEID as though only E3 was received. Since chronological order is not considered for this embodiment, E2 and E3 can occur in either order. The next event sequence entry includes the event identifier E3 followed by two event identifiers E2 with corresponding CEID CE2, which is the same CEID as though only the event identified by E2 was received. Although the ESL 308 does not specify any timeout periods, the event filter 114 may employ a default timeout period.

FIG. 4 is a simplified tabular diagram of an exemplary ESL 408 which may instead be used as the ESL 208 according to another embodiment of the present disclosure in which the chronological order of the events is considered. The ESL 408 is similar to the ESL 308 including only 3 event identifiers E1 - E3, and also includes an event sequence column with predetermined event sequences and a corresponding CEID column for each predetermined event sequence. In this case, however, the predetermined event sequences with multiple events are provided in chronological order. When chronological order is considered, the event identifiers in the event sequences are shown separated by arrow symbols ">". In addition, a third column is included for providing a timeout (TO) duration with arbitrary units. The TO duration is a value that is programmed into the timer 210 for the corresponding event sequence.

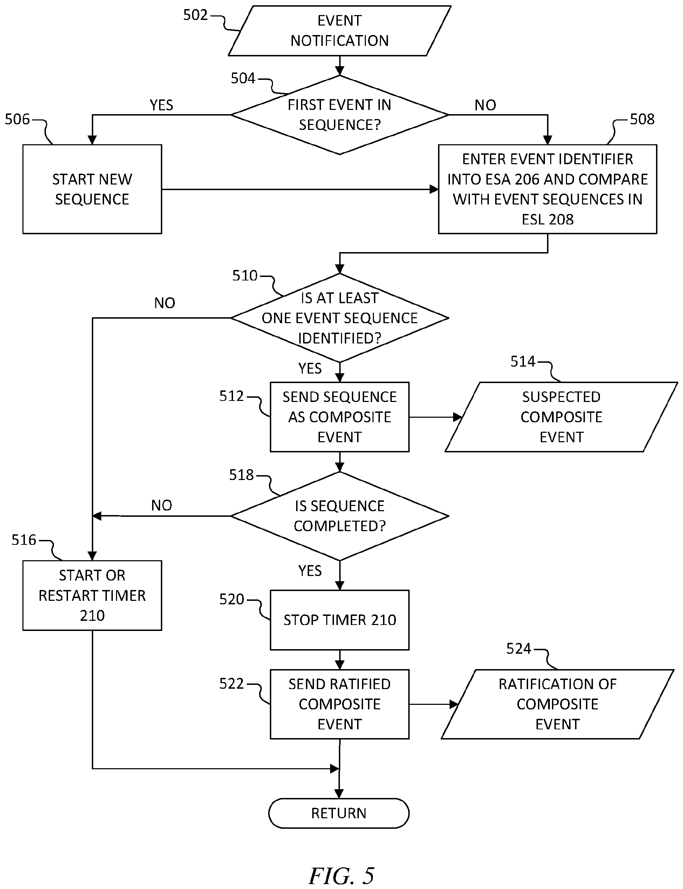

FIG. 5 is an exemplary flowchart diagram illustrating operation of the event manager 102 using the ESL 308 according to one embodiment of the present disclosure triggered by an event notification received via the ECL 112. It is noted that the flowchart shown in FIG. 5 is exemplary only in which it is understood that many variations and other versions are possible and contemplated, in which the present disclosure is not intended to be limited to that shown in FIG. 5. Block 502 denotes an event notification received by the controller 202 via the ECL 112. At next block 504, it is queried whether the received event notification identifies a first event of an event sequence, essentially inquiring whether the ESA 206 is empty. If it is the first event of a new event sequence, then the controller 202 starts a new sequence at block 506, and then enters the corresponding event identifier into the ESA 206 and compares ESA 206 with the predetermined event sequences in ESL 308 at block 508. If instead the event is not the first event of a sequence, then the controller 202 adds the corresponding event identifier into the ESA 206 and then compares the updated ESA 206 with the predetermined event sequences in ESL 308 at block 508. At next block 510, it is queried whether at least one event sequence is identified based on the comparison. If the controller 202 identifies at least one predetermined sequence, then operation advances to block 512 in which the identified sequence in the ESA 206 is sent as a suspected composite event CD 115 at block 514.

Operation then advances to block 518 to inquire whether the event sequence in the ESA 206 has been completed, meaning whether the event or event sequence exactly matches only one event sequence in the ESL 308. If no sequences have been identified as determined at block 510, or if an identified event sequence is not completed meaning that other event sequences are still possible or the suspected event sequence is not completed, operation advances to block 516 in which the controller 202 starts the timer 210 if not already started or otherwise restarts the timer 210, and operation returns for receiving any additional event notifications. When the identified event sequence is completed as determined at block 518, then operation instead advances to block 520 in which the timer 210 is stopped, and then to block 522 in which the controller 202 sends the composite event as CD 115 as the ratified composite event, and operation is completed and returns for receiving any additional event notifications. As indicated at block 524, ratification of the CD 115 may include a notification or the like that DC 115 is ratified, in which such ratification (including its various forms such as "ratify," "ratifies," "ratified," etc.) means that the composite event is confirmed or otherwise accepted as the only composite event.

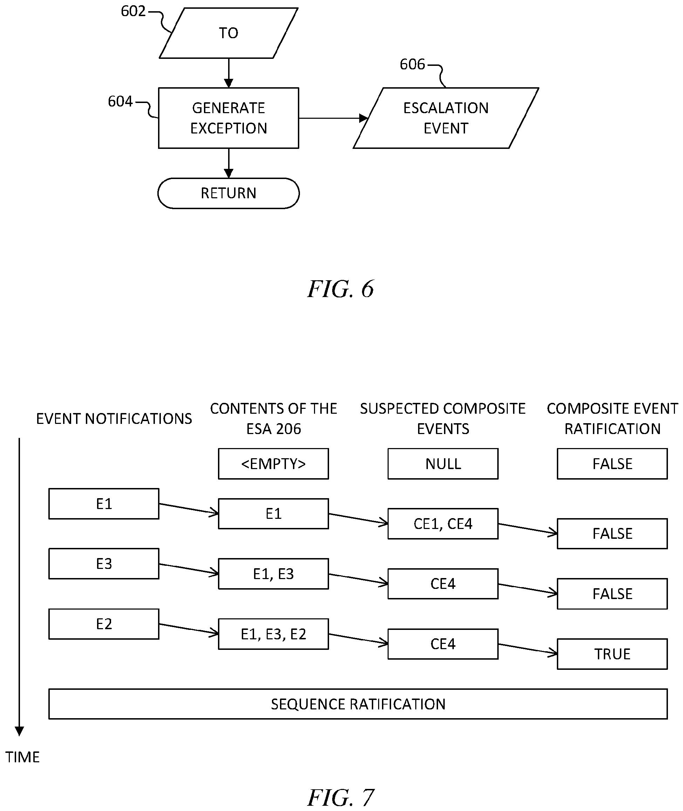

FIG. 6 is an exemplary diagram illustrating operation of the event manager 102 according to one embodiment of the present disclosure triggered by assertion of TO by the timer 210. It is noted that the flowchart shown in FIG. 6 is exemplary only in which it is understood that many variations and other versions are possible and contemplated, in which the present disclosure is not intended to be limited to that shown in FIG. 6. Upon assertion of TO as indicated at block 602, the controller 202 generates an exception signal or the like at block 604 thereby causing escalation of the event as indicated at block 606, and the controller 202 then returns and waits for the next event notification. Escalation of an event may cause a special composite event sent to the response block 116, such as stating "sequence not found" or the like. The handling of special composite events or the like is beyond the scope of the present disclosure and not further discussed.

FIG. 7 is a time chart illustrating operation of the event manager 102 following flowchart diagrams of FIGs 5 and 6 using the ESL 308 according to one embodiment. The particular time chart illustrated is exemplary only in which it is understood that many variations may occur during operation. The time chart lists the event identifiers for corresponding event notifications received over time, contents of the ESA 206, CEIDs of suspected composite events, and composite event ratification. Prior to receiving any event notifications, the ESA 206 is initially empty and there are no suspected or ratified composite events (e.g., false). A first event notification is received associated with event identifier E1, which is inserted into the ESA 206. At block 512, event identifier E1 limits the suspected composite events to CE1 and CE4, in which neither of the suspected composite events are ratified. Subsequently, a second notification is received associated with event identifier E3, which is entered into the ESA 206 now including E1 and E3. Chronological information is not tracked for the ESL 308, so that the suspected composite events now only include CE4 but which is not yet complete. Subsequently, a third notification is received associated with event identifier E2, which is entered into the ESA 206 now including E1, E3, and E2. The suspected composite event is still CE4, and since completed, CE4 is ratified at block 522. Thus, composite event ratification is true and CE4 is the ratified event sequence as indicated by CE 115.

It is noted that if the order of the event notifications is modified, such as {E1, E2, E3}, or {E3, E1, E2}, or {E2, E3, E1}, etc., then operation is essentially the same since chronological order is not considered. For {E3, E1, E2} in which E3 is received first, then the suspected composite events include CE2, CE3, and CE4 when E3 is the only event identifier, and when E1 is next received, CE4 is the only suspected composite event which is not yet complete. CE4 is ratified when E2 is received last. For {E2, E3, E1} in which E2 is received first, then the suspected composite events include CE2, CE3, and CE4 when E2 is the only event and also when E3 is next received. When E1 is received last, CE4 is ratified. If instead E2 is again received for {E3, E2, E2}, then CE2 is ratified.

In any of these cases, after receiving each event notification, the timer 210 is restarted with either a predetermined duration or a default time duration depending upon the particular embodiment implemented. If TO is asserted by the timer 210 before ratification of a composite event, then an exception is generated causing an escalation event as shown in FIG. 6.

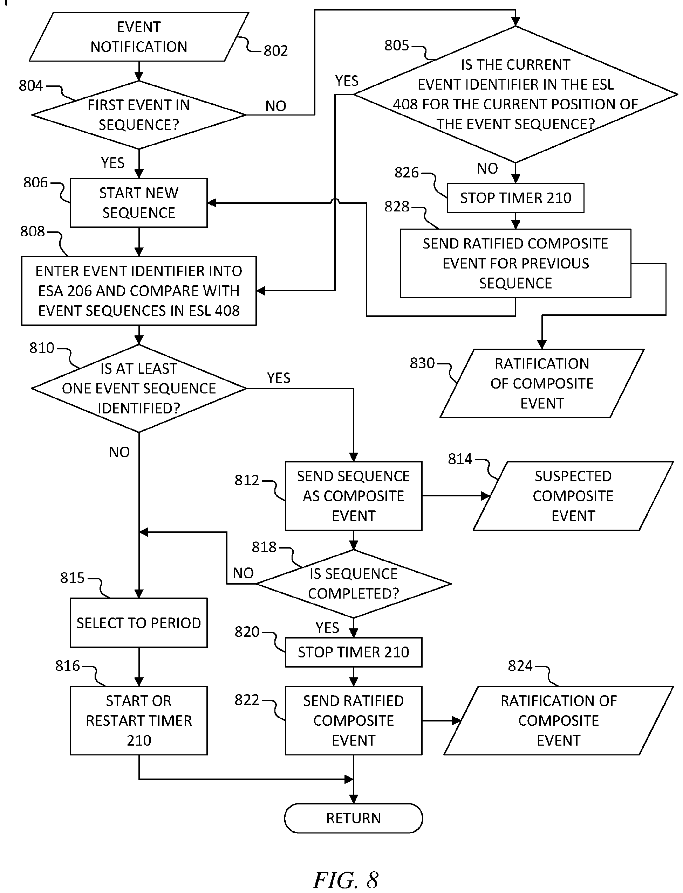

FIG. 8 is another exemplary flowchart diagram illustrating operation of the event manager 102 using the ESL 408 according to another embodiment of the present disclosure triggered by an event notification received via the ECL 112. It is noted that the flowchart shown in FIG. 8 is exemplary only in which it is understood that many variations and other versions are possible and contemplated, in which the present disclosure is not intended to be limited to that shown in FIG. 8. A primary difference when using the ESL 408 rather than the ESL 308 is the consideration of chronological order. In the flowchart of FIG. 8 using the ESL 408, for example, the event sequence {E1 > E2 > E3} is treated differently than the event sequence {E1 > E3 > E2} since the chronological order is different between the two sequences.

Block 802 denotes an event notification received by the controller 202 via the ECL 112. At next block 804, it is queried whether the received event is a first event of an event sequence, essentially inquiring whether the ESA 206 is empty. If it is the first event of a new event sequence, then the controller 202 starts a new sequence at block 806, and then enters the corresponding event identifier into the ESA 206 and compares ESA 206 with the predetermined event sequences in ESL 408 at block 808. If instead the event is not the first event of a sequence, then the controller 202 advances instead to block 805 to inquire whether the new event is the correct next event in the current position of the currently suspected sequence according to the ESL 408, which lists the events according to chronological order. If the new event is the correct next event according to a predetermined event sequence, then the controller 202 adds the corresponding event identifier into the ESA 206 and advances to block 808 to compare the sequences. At next block 810, it is queried whether at least one event sequence is identified based on the event sequence comparison. If no sequences have been identified at block 810, then operation advances to block 815 in which a TO duration is selected for programming the timer 210, and then to block 816 to program the timer 210 with the TO duration and then to start or restart the timer 210 and operation returns. The TO duration may be selected form the ESL 408 or may be a default value.

If instead the controller 202 identifies at least one predetermined sequence at block 810, then operation advances to block 812 in which the identified sequence in the ESA 206 is sent as a suspected composite event at block 814. Operation then advances to block 818 to inquire whether the event sequence in the ESA 206 has been completed, meaning whether it exactly matches only one event sequence in the ESL 408. If an identified event sequence is not completed meaning that other event sequences are still possible or the suspected event sequence is not yet completed as determined at block 818, then operation advances to block 815 to select a TO period, such as by retrieving a corresponding TO period from the ESL 408, and then operation advances to block 816 in which the controller 202 programs and restarts the timer 210, and operation exits. When the identified event sequence is completed as determined at block 818, then operation instead advances to block 820 in which the timer 210 is stopped, and then to block 822 in which the controller 202 sends the composite event as CD 115 as the ratified composite event, and operation is completed and returns for receiving any additional event notifications. As indicated at block 824, ratification of the CD 115 may include a notification or the like that DC 115 is ratified.

Referring back to block 805, if the new event is not the correct next event in the current position of the currently suspected sequence according to the ESL 408, then operation advances instead to block 826 in which the timer 210 is stopped, and then to block 828 in which a previously suspected composite event is sent as CD 115 as the ratified composite event. As indicated at block 830, ratification of the CD 115 may include a notification or the like that DC 115 is ratified. In this case, operation next advances to block 806 to start a new sequence using the new event, and operation continues in accordance with that previously described.

Upon assertion of TO as indicated at block 602 with reference to FIG. 6, then the controller 202 generates an exception signal or the like at block 604 thereby escalating the event as indicated at block 606, and the controller 202 then exits and waits for the next event notification.

It is appreciated that the primary differences between operation of the event manager 102 using the ESL 308 as described in FIG. 5 and operation of the event manager 102 using the ESL 408 as described in FIG. 8 is whether chronological information is considered and programming of the timer 210 with either a default duration or a duration retrieved from the ESL 408. Although not shown, a time chart illustrating operation of the event manager 102 following flowchart diagrams of FIGs 8 and 6 using the ESL 408 according to one embodiment may be constructed similar to that shown in FIG. 7, except modified to account for chronological order.

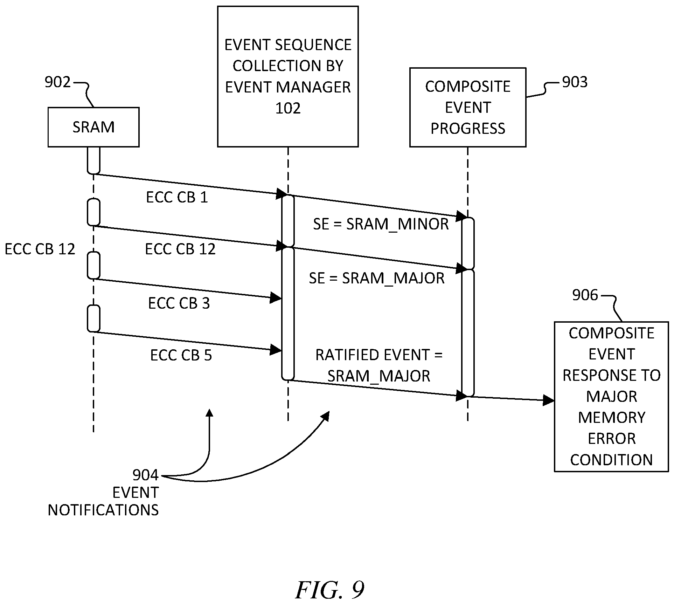

FIG. 9 is a process chart illustrating memory error detection by the event manager 102 performing event filtering and classification using composite events implemented according to an embodiment of the present disclosure. In this case, a microcontroller system or the like includes a static random access memory (SRAM) 902 protected by error correction code (ECC) with single error correction, double error detection (SECDED) or the like. A conventional default reaction to a corrected single-bit error is to set a flag, but there is no other expected reaction. Assume that it is known through characterization that when a sequence of four different and known single-bit corrections occur in physical proximity in the memory array, that the SRAM 902 is close to failure and corrective action should be taken. The ESL 208 of the event manager 102 may be programmed to detect various errors in the system including a failure signature for the SRAM 902 including a sequence of four different and known single-bit corrections occur in physical proximity. The ESL 208 may also be configured so that a suspicion of a major failure exists when two corrections occur under a given amount of time, but only confirmed after the fourth one arrives prior to a predetermined timeout period. In this manner, the event manager 102 can be configured to identify the memory failure signature and ratify a major event instead of a minor correction.

As shown in FIG. 9, the SRAM 902 generates ECC correction event notifications 904 received by the event manager 102. A composite event progress column 903 illustrates tracking and corresponding classification by the event manager 102 over time in response to the event notifications 904. In response to a first ECC correction event notification (e.g., ECC correction of bit 1 or ECC CB 1), a suspected composite event is a minor SRAM error condition of the SRAM 902. Such a minor error may or may not have an associated reaction, such as an error notification to an operation system (OS). In response to a second ECC correction event notification (e.g., ECC CB 12), the suspected composite event is changed to a major SRAM error condition of the SRAM 902. If further notifications are not received, response may vary depending upon the system. Similarly, in response to a third ECC correction event notification (e.g., ECC CB 3), the suspected composite event remains a major SRAM error condition. If a fourth event notification is not received, response may vary depending upon the system. In response to a fourth ECC correction event notification (e.g., ECC CB 5), the suspected composite event is ratified as a major SRAM error condition prompting a CE 115 response to the memory error condition 906. The particular response is beyond the scope of the present disclosure but may include providing a system notice of impending failure of the SRAM 902.

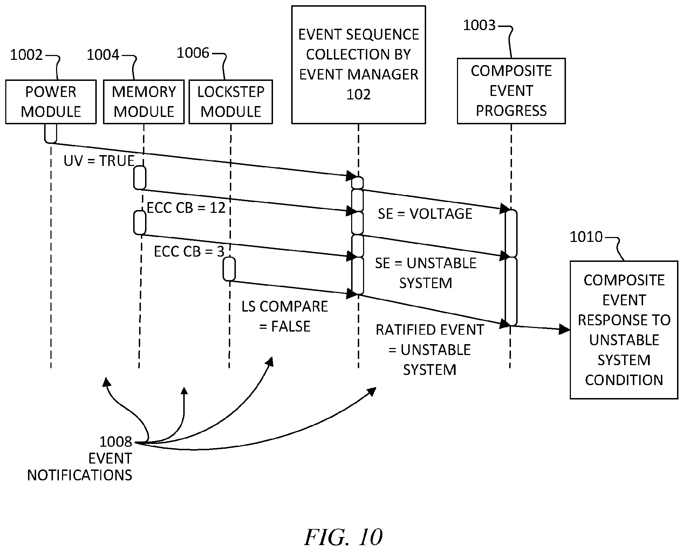

FIG. 10 is a process chart illustrating system-on-chip (SoC) error detection by the event manager 102 performing event filtering and classification using composite events implemented according to an embodiment of the present disclosure. In this case, the SoC at least includes a power module 1002 with an undervoltage detector, a memory module 1004 with ECC error detection/correction, and a lockstep module 1006. It is noted that the power module 1002 may report an undervoltage event without any further reporting by the memory module 1004 or the lockstep module 1006, in which such an event, by itself, is normally treated with a degraded mode of operation. Similarly, one or two ECC bit corrections by the memory module 1004 may be treated as minor events. A lockstep compare error may also be treated as a minor event when reported in isolation.

In a conventional configuration, if each of these error events collectively occurred within a short time, independent minor responses may be performed. In the present case, however, assume that it is known through characterization or the like that an electromagnetic interference (EMI) event, which may not be separately detected, can reduce the supply voltage and have a cascaded effect that corrupts memory and causes lockstep errors. In that case, the event manager 102 may be programmed to identify a signature based on this sequence of events and ratify an "Unstable System" composite event instead of independent and uncorrelated events. These events may or may not be detected in any particular chronological order.

As shown in FIG. 10, the power module 1002, the memory module 1004, and the lockstep module 1006 each generator corresponding event notifications 1008 received by the event manager 102. A composite event progress column 1003 illustrates tracking and corresponding classification by the event manager 102 over time in response to the event notifications 1008. In response to an undervoltage event notification from the power module 1002 (shown as UV = TRUE), a suspected composite event (SE) is a voltage error condition which, by itself, might invoke a degraded operation mode. In response to each of one or two ECC correction event notifications (ECC CB = 12, 3) from the memory module 1004 in addition to the undervoltage event notification (regardless of order received), the suspected composite event is changed to an unstable system condition. In response to a lockstep error event notification from the lockstep module 1006 in addition to the undervoltage and memory error notifications, the suspected composite event is ratified as an unstable system condition prompting a CE 115 response to the unstable system condition 1010. The response is beyond the scope of the present disclosure but may include unstable system notifications along with system shutdown.

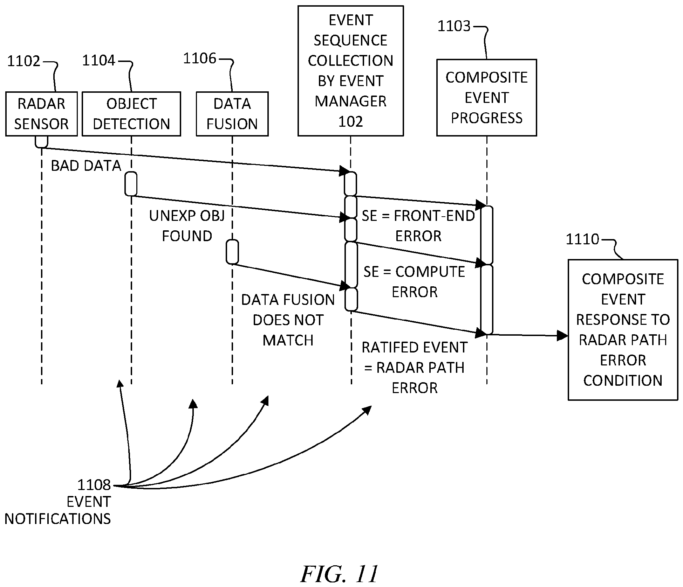

FIG. 11 is a process chart illustrating automotive radar processing error detection by the event manager 102 performing event filtering and classification using composite events implemented according to an embodiment of the present disclosure. In this case, the autonomous driving computer at least includes a radar sensor 1102 including a radio frequency (RF) front-end, an object detection module 1104, and a data fusion module 1106. In this case the radar sensor 1102 is configured to detect and report bad data.

In a conventional configuration, the bad data is removed before continuing with calculations, which costs execution cycles and data alignment of a complete data fusion chain. In the present case, however, bad data may be flagged and collected in the sequence-based event collection but allowed to continue in the data path. At each step, the data continues to be flagged as bad by the different processing elements.

As shown in FIG. 11, the radar sensor 1102, the object detection module 1104, and the data fusion module 1106 each generator corresponding event notifications 1108 received by the event manager 102. A composite event progress column 1103 illustrates tracking and corresponding classification by the event manager 102 over time in response to the event notifications 1108. In response to a bad data event notification from the radar sensor 1102, a suspected composite event is a front-end error condition which, by itself, might cause the data to be removed. In response to an unexpected object (UNEXP OBJ) found event notification from the objection detection module 1104, the suspected composite event is changed to a compute error condition. In response to a data fusion matching error event notification in addition to the bad data and unexpected object error notifications, the suspected composite event is ratified as radar path error condition prompting a CE 115 response to the radar path error condition 1110. The response is beyond the scope of the present disclosure but may include radar error notifications or the like. In this manner, sequence-based event collection performed by the event manager 102 can identify the signature and ratify a radar path error condition instead of independent and uncorrelated events in phase with the rest of the data without needing to resynchronize paths of the chain.

Embodiments of the present disclosure may include features recited in the following numbered clauses:
1. An event manager for filtering safety and security events of a system, comprising:
   an event sequence list comprising a plurality of predetermined event sequences in which each sequence comprises at least one event identifier identifying a corresponding one of a plurality of monitored events;
   an event sequence array that stores a received event sequence in response to received event notifications; and
   a controller that, for each received event notification, is configured to store a corresponding event identifier into the event sequence array and to determine whether the received event sequence matches at least one of the plurality of predetermined event sequences for determining a composite event and a corresponding response.
2. The event manager of clause 1, wherein each of the plurality of predetermined event sequences comprises one or more event identifiers regardless of chronological order of received event notifications.
3. The event manager of clause 2, further comprising:
   a timer; and
   wherein the controller, for each received event notification, is configured to identify a suspected composite event and to restart the timer when multiple event sequences in the event sequence list potentially match the received event sequence.
4. The event manager of clause 3, wherein the controller is configured to ratify the received event sequence as a final composite event and to stop the timer when only one event sequence in the event sequence list matches the received event sequence.
5. The event manager of clause 3, wherein the controller is further configured to generate an exception in the event of timeout of the timer.
6. The event manager of clause 1, wherein each of the plurality of predetermined event sequences is based on chronological order of received event notifications, and wherein the controller, for each received event notification, is configured to determine whether the received event sequence matches at least one of the plurality of predetermined event sequences in chronological order.
7. The event manager of clause 6, further comprising:
   a timer;
   wherein the event sequence list further comprises a plurality of timeout periods including a corresponding timeout period for each of the plurality of predetermined event sequences; and
   wherein the controller, for each received event notification, is configured to identify a suspected composite event, program the timer with a corresponding timeout period, and restart the timer when multiple event sequences in the event sequence list potentially match the received event sequence.
8. The event manager of clause 7, is configured to ratify the received event sequence as a final composite event and to stop the timer when only one event sequence in the event sequence list matches the received event sequence.
9. The event manager of clause 7, wherein the controller is further configured to generate an exception in the event of timeout of the timer.
10. The event manager of clause 1, further comprising a response block that provides at least one event response to a response handler identifying at least one of the suspected composite event and the final composite event.
11. A method of filtering safety and security events of a system, comprising:
   entering a corresponding one of a plurality of event identifiers into an event sequence array upon receiving an event notification;
   comparing the event sequence array with a plurality of predetermined event sequences in which each predetermined event sequence comprises one or more event identifiers;
   determining whether the event sequence array matches at least part of any of the plurality of predetermined event sequences;
   when the event sequence array does not match at least part of any of the plurality of predetermined event sequences, starting a timer;
   when the event sequence array matches only a subset of more than one of the plurality of predetermined event sequences, identifying a suspected composite event and restarting the timer; and
   when the event sequence array matches only one of the plurality of predetermined event sequences, stopping the timer, ratifying a corresponding composite event and providing notice.
12. The method of clause 11, further comprising providing an exception upon timeout of the timer.
13. The method of clause 11, further comprising repeating the entering, comparing, and determining until timeout of the timer or until a composite event is ratified.
14. The method of clause 11, wherein said determining comprises determining whether the event sequence array matches at least part of any of the plurality of predetermined event sequences regardless of chronological order of event notifications received.
15. The method of clause 14, further comprising identifying a suspected composite event and restarting the timer when multiple event sequences in the event sequence list potentially match the received event sequence.
16. The method of clause 15, further comprising ratifying the received event sequence as a final composite event and stopping the timer when only one event sequence in the event sequence list matches the received event sequence.
17. The method of clause 11, wherein said determining comprises determining whether the event sequence array matches at least part of any of the plurality of predetermined event sequences based on chronological order of event notifications received.
18. The method of clause 17, further comprising identifying a suspected composite event, programming the timer with a corresponding timeout period, and restarting the timer when multiple event sequences in the event sequence list potentially match the received event sequence.
19. The method of clause 17, further comprising ratifying the received event sequence as a final composite event and stopping the timer when only one event sequence in the event sequence list matches the received event sequence.
20. The method of clause 11, further comprising generating an exception in the event of timeout of the timer.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, the various functional blocks and components may be implemented with variations of positive circuitry or negative circuitry that may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function. In addition, one or more of the various functional blocks and components described herein may be implemented in software executed by a processor or processing system or the like.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. An event manager for filtering safety and security events of a system, comprising:
an event sequence list comprising a plurality of predetermined event sequences in which each sequence comprises at least one event identifier identifying a corresponding one of a plurality of monitored events;
an event sequence array that stores a received event sequence in response to received event notifications; and
a controller that, for each received event notification, is configured to store a corresponding event identifier into the event sequence array and to determine whether the received event sequence matches at least one of the plurality of predetermined event sequences for determining a composite event and a corresponding response.

2. The event manager of claim 1, wherein each of the plurality of predetermined event sequences comprises one or more event identifiers regardless of chronological order of received event notifications.

3. The event manager of any of claims 1 to 2, further comprising:
a timer; and
wherein the controller, for each received event notification, is configured to identify a suspected composite event and to restart the timer when multiple event sequences in the event sequence list potentially match the received event sequence.

4. The event manager of claim 3, wherein the controller is configured to ratify the received event sequence as a final composite event and to stop the timer when only one event sequence in the event sequence list matches the received event sequence.

5. The event manager of any of claims 1 to 4, wherein each of the plurality of predetermined event sequences is based on chronological order of received event notifications, and wherein the controller, for each received event notification, is configured to determine whether the received event sequence matches at least one of the plurality of predetermined event sequences in chronological order.

6. The event manager of any of claims 1 to 5, further comprising:
a/the timer;
wherein the event sequence list further comprises a plurality of timeout periods including a corresponding timeout period for each of the plurality of predetermined event sequences; and
wherein the controller, for each received event notification, is configured to identify a suspected composite event, program the timer with a corresponding timeout period, and restart the timer when multiple event sequences in the event sequence list potentially match the received event sequence.

7. The event manager of claim 6, is configured to ratify the received event sequence as a final composite event and to stop the timer when only one event sequence in the event sequence list matches the received event sequence.

8. The event manager of any of claims 1 to 7, wherein the controller is further configured to generate an exception in the event of timeout of the timer.

9. The event manager of any of claims 1 to 8, further comprising a response block that provides at least one event response to a response handler identifying at least one of the suspected composite event and the final composite event.

10. A method of filtering safety and security events of a system, comprising:
entering a corresponding one of a plurality of event identifiers into an event sequence array upon receiving an event notification;
comparing the event sequence array with a plurality of predetermined event sequences in which each predetermined event sequence comprises one or more event identifiers;
determining whether the event sequence array matches at least part of any of the plurality of predetermined event sequences;
when the event sequence array does not match at least part of any of the plurality of predetermined event sequences, starting a timer;
when the event sequence array matches only a subset of more than one of the plurality of predetermined event sequences, identifying a suspected composite event and restarting the timer; and
when the event sequence array matches only one of the plurality of predetermined event sequences, stopping the timer, ratifying a corresponding composite event and providing notice.

11. The method of claim 10, further comprising providing an exception upon timeout of the timer.

12. The method of any of claims 10 to 11, further comprising repeating the entering, comparing, and determining until timeout of the timer or until a composite event is ratified.

13. The method of any of claims 10 to 12, wherein said determining comprises determining whether the event sequence array matches at least part of any of the plurality of predetermined event sequences regardless of chronological order of event notifications received.

14. The method of any of claims 10 to 13, further comprising identifying a suspected composite event and restarting the timer when multiple event sequences in the event sequence list potentially match the received event sequence.

15. The method of any of claims 10 to 14, further comprising ratifying the received event sequence as a final composite event and stopping the timer when only one event sequence in the event sequence list matches the received event sequence.

## Amended claims

### Amended claims in accordance with Rule 137(2) EPC.

1. An event manager (102) for filtering safety and security events of a system, comprising:
an event sequence list (208) comprising a plurality of predetermined event sequences in which each sequence comprises at least one event identifier identifying a corresponding one of a plurality of monitored events;
an event sequence array (206) that stores a received event sequence in response to received event notifications; and
a controller (202) that, for each received event notification, is configured to store a corresponding event identifier into the event sequence array (206) and to determine whether the received event sequence matches at least one of the plurality of predetermined event sequences for determining a composite event and a corresponding response; and
a timer (210);
wherein the event sequence list (208) further comprises a plurality of timeout periods including a corresponding timeout period for each of the plurality of predetermined event sequences; and
wherein the controller (202), for each received event notification, is configured to identify a suspected composite event, program the timer (210) with a corresponding timeout period, and restart the timer (210) when multiple event sequences in the event sequence list (208) potentially match the received event sequence.

2. The event manager (102) of claim 1, wherein each of the plurality of predetermined event sequences comprises one or more event identifiers regardless of chronological order of received event notifications.

3. The event manager of any of claims 1 to 2, further comprising:
a timer (210); and
wherein the controller (202), for each received event notification, is configured to identify a suspected composite event and to restart the timer when multiple event sequences in the event sequence list (208) potentially match the received event sequence.

4. The event manager (102) of claim 3, wherein the controller (202) is configured to ratify the received event sequence as a final composite event and to stop the timer (210) when only one event sequence in the event sequence list (208) matches the received event sequence.

5. The event manager (102) of any of claims 1 to 4, wherein each of the plurality of predetermined event sequences is based on chronological order of received event notifications, and wherein the controller (202), for each received event notification, is configured to determine whether the received event sequence matches at least one of the plurality of predetermined event sequences in chronological order.

6. The event manager (102) of claim 1, wherein the event manager (102) is configured to ratify the received event sequence as a final composite event and to stop the timer (210) when only one event sequence in the event sequence list (208) matches the received event sequence.

7. The event manager (102) of any claims 1 to 6, wherein the controller (202) is further configured to generate an exception in the event of timeout of the timer (210).

8. The event manager (102) of any of claims 1 to 7, further comprising a response block that provides at least one event response to a response handler identifying at least one of the suspected composite event and the final composite event.

9. A method of operating an event manager (102) for filtering safety and security events of a system, the method comprising:
entering a corresponding one of a plurality of event identifiers into an event sequence array (206) upon receiving an event notification;
comparing a received event sequence stored in the event sequence array (206) with a plurality of predetermined event sequences in which each predetermined event sequence comprises one or more event identifiers;
determining whether the received event sequence in the event sequence array (206) matches at least part of any of the plurality of predetermined event sequences;
when the received event sequence in the event sequence array (206) does not match at least part of any of the plurality of predetermined event sequences, starting a timer (210);
when the received event sequence in the event sequence array (206) matches only a subset of more than one of the plurality of predetermined event sequences, identifying a suspected composite event and restarting the timer (210); and
when the received event sequence in the event sequence array (206) matches only one of the plurality of predetermined event sequences, stopping the timer (210), ratifying a corresponding composite event and providing notice.

10. The method of claim 9, further comprising providing an exception upon timeout of the timer (210).

11. The method of any of claims 9 to 10, further comprising repeating the entering, comparing, and determining until timeout of the timer (210) or until a composite event is ratified.

12. The method of any of claims 9 to 11, wherein said determining comprises determining whether the event sequence array (210) matches at least part of any of the plurality of predetermined event sequences regardless of chronological order of event notifications received.

13. The method of any of claims 9 to 12, further comprising identifying a suspected composite event and restarting the timer (210) when multiple event sequences in the event sequence list (208) potentially match the received event sequence.

14. The method of any of claims 9 to 13, further comprising ratifying the received event sequence as a final composite event and stopping the timer (210) when only one event sequence in the event sequence list (208) matches the received event sequence.
